# EUROPÄISCHE PATENTSCHRIFT

(11) **EP 2 569 726 B1**
(45) Veröffentlichungstag und Bekanntmachung des Hinweises auf die Patenterteilung: **04.04.2018**
(21) Anmeldenummer: 11730182.0
(22) Anmeldetag: 06.05.2011
(51) Int. Cl.: G06F 21/54

(54) **VERFAHREN ZUM ÜBERPRÜFEN, OB PROGRAMMANWEISUNGEN VON EINEM TRAGBAREN ENDGERÄT AUSGEFÜHRT WURDEN**
METHOD FOR CHECKING WHETHER PROGRAM INSTRUCTIONS HAVE BEEN EXECUTED BY A PORTABLE TERMINAL
PROCÉDÉ POUR CONTRÔLER SI DES INSTRUCTIONS DE PROGRAMME ONT ÉTÉ EXCUTÉES PAR UN TERMINAL PORTABLE

(30) Priorität: 10.05.2010 DE 102010019995
(43) Veröffentlichungstag der Anmeldung: 20.03.2013
(73) Patentinhaber: Giesecke+Devrient Mobile Security GmbH, 81677 München (DE)
(72) Erfinder: BAUER, Sven, 85591 Vaterstetten (DE)
(86) Internationale Anmeldenummer: PCT/EP2011/002269
(87) Internationale Veröffentlichungsnummer: WO 2011/141143

(56) Entgegenhaltungen:
- WO-A1-2005/024605
- DE-A1-102007 038 763
- US-A1- 2001 027 383
- PHILIPP GRABHER ET AL: "Non-deterministic processors", PROCEEDINGS OF THE 4TH WORKSHOP ON EMBEDDED SYSTEMS SECURITY, WESS '09, 1. Januar 2009 (2009-01-01), Seiten 1-10, XP55003710, New York, New York, USA DOI: 10.1145/1631716.1631717 ISBN: 978-1-60-558700-4
- CHANG H ET AL: "Protecting Software Code by Guards", LECTURE NOTES IN COMPUTER SCIENCE, SPRINGER, DE, Bd. 2320, 10. Juni 2002 (2002-06-10), Seiten 160-175, XP002245264, DOI: DOI:10.1007/3-540-47870-1_10 ISBN: 978-3-540-24128-7

## Beschreibung

Die Erfindung betrifft ein Verfahren und ein System zum Überprüfen, ob Programmanweisungen von einem tragbaren Endgerät ausgeführt worden sind.

Mit zunehmender Verbreitung von elektronischen Endgeräten, insbesondere Endgeräten wie beispielsweise Mobilfunkgeräten, PDA, Tablet-PC's, Smartphones etc. werden auf diesen Endgeräten vermehrt persönliche, vertrauliche, geheime Daten und/ oder zumindest Daten mit sensiblem Inhalt verarbeitet. Zu diesen Daten gehören insbesondere Geheimnisse eines Benutzers, beispielsweise Autorisierungsdaten, Zugangsdaten, personenbezogene Identifizierungsnummern, Bezahltransaktionsdaten, insbesondere TAN und Kreditkartennummern. Werden diese Daten von einem Angreifer ausspioniert, entsteht in vielen Fällen ein finanzieller oder persönlicher Schaden.

Vergleichbar zu den Angriffsmethoden auf einem herkömmlichen PC mit Internetverbindung wird immer häufiger das tragbare Endgerät zum Angriffsziel, beispielsweise mittels Spionagesoftware. Die Daten auf derartigen Endgeräten sollten daher einem maximalen Schutz unterliegen, sodass Spionageangriffe auf derartige Daten erfolglos bleiben.

Ein Spionageangriff wird durch Einnisten von schädlichen Fremdprogrammanweisungen erzielt, beispielsweise durch sogenannte Trojaner, Viren oder Würmer als Schadsoftware. Daher ist es nötig, dass das tragbare Endgerät die jeweils auszuführenden Programmanweisungen überprüft, um ein Einnisten der Fremdprogrammanweisung zu erkennen und gegebenenfalls abwehrende Aktionen einzuleiten. Die Überprüfung der auszuführenden Programmanweisungen kann dabei vor, während oder nach der eigentlichen Ausführung der zu überprüfenden Programmanweisungen stattfinden.

Als Programmanweisungen wird erfindungsgemäß eine Folge von maschinenlesbaren Anweisungen, Instruktionen und/ oder Befehlen verstanden, die eine Recheneinheit, insbesondere eine CPU, eines tragbaren Endgeräts ausführen und abarbeiten kann. Es ist dabei nicht erfindungswesentlich, ob die Programmanweisungen als Maschinencode, Bytecode oder Quellcode vorliegt und ob für deren Ausführung in der CPU ein Compiler oder Interpreter als Übersetzungsinstanz zwischengeschaltet ist.

Aus dem Stand der Technik sind Überprüfungsverfahren für Programmanweisungen bekannt. Gemäß der US-Patentschrift US-7191464-B2 wird eine Überprüfung bereits während der Ausführung der Startprogrammanweisung eines Endgeräts, dem sogenannten Bootcode, durchgeführt. Die Programmanweisungen sind dabei in Teile unterteilt, wobei jeder Teil von Programmanweisungen den als nächsten auszuführenden Teil von Programmanweisungen auf Integrität prüft, bevor er die Kontrolle an diesen nächsten Teil an das Endgerät abgibt.

Problematisch ist bei dieser Vorgehensweise, dass der erste Teil von Programmanweisung vertrauenswürdig sein muss, da dieser erste Teil selbst nicht überprüft wird. Dies kann man beispielsweise dadurch lösen, dass der erste Teil der Programmanweisungen in einem extra Baustein, beispielsweise einem ROM-Speicher abgelegt wird, da ein ROM Speicher nach erstmaligem Beschreiben nicht mehr verändert werden kann. Ein nachträgliches Aktualisieren des ersten Teils, beispielsweise mittels Software-Patches, ist dabei allerdings ausgeschlossen.

In der DE 10 2007 0038 763 A1 wird ein Verfahren zum Sichern eines Programms gegen Kontrollflussmanipulationen und fehlerhaften Programmablauf beschrieben. Dabei wird ein unsicheres Programm eingelesen und anschließend in ein gesichertes Programm transformiert, indem Programmbefehlssequenzen zur Erzeugung einer Kontrollfluss-Markierungsfolge sequentiell in Programmteile eingefügt werden. Ein Ausführungspfad des Programms kann so nachträglich geprüft werden.

In der US-2008/0022108-A1 wird wiederum ein Verfahren zum Überprüfen eines ersten Teils von Programmanweisungen beschrieben. Dabei wird auf Basis des Teils der Programmanweisungen eine zufällige kryptografische Funktion errechnet, welche in einer separaten und externen kryptografischen Hardwareeinheit vor dem Ausführen des Teils der Programmanweisungen verifiziert wird. Ein Verzicht auf die separate und außerhalb des Systems stehende Einheit ist in dem Fall unmöglich.

Der Erfindung liegt daher die Aufgabe zugrunde, ein Verfahren und ein System zum Überprüfen, ob Programmanweisungen von einem Endgerät ausgeführt worden sind, bereitzustellen, welches einfach und sicher ist sowie kostengünstig realisiert werden kann. Dabei sollte diese Überprüfung nicht vorhersagbar und nicht ressourcenintensiv sein. Dabei soll unwesentlich sein, zu welchem Zeitpunkt Programmanweisungen und welcher Teil von Programmanweisungen bereits überprüft sein muss. Eine Teilaufgabe ist dabei das Nutzen bestehender Hardware-Infrastruktur des Endgeräts.

Diese Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Erfindungsgemäß wird daher ein Verfahren zum Überprüfen, ob Programmanweisungen von einem Endgerät ausgeführt worden sind, vorgeschlagen, bei dem die Programmanweisungen durch das Endgerät angefordert werden, wobei die Programmanweisungen in ausführbarer Form in einer vertrauenswürdigen Instanz, insbesondere einer Chipkarte, abgelegt sind. Das Ablegen erfolgt bevorzugt in einem flüchtigen Speicherbereich der vertrauenswürdigen Instanz, insbesondere einem Flashspeicher. Das Anfor dem erfolgt dabei bevorzugt über eine bestehende Kommunikationsverbindung zwischen Endgerät und der vertrauenswürdigen Instanz.

Auf den Schritt des Anforderns folgt der Schritt des variablen Modifizierens der ausführbaren Programmanweisungen durch die vertrauenswürdige Instanz in derart, dass die modifizierten Programmanweisungen bei jeder Ausführung des Verfahrens variieren. Dieses variable Modifizieren bedeutet sinngemäß, dass bei jeder Ausführung des erfindungsgemäßen Verfahrens die Programmanweisung unterschiedlich modifiziert wird. Das bedeutet, dass bei wiederholter Ausführung des erfindungsgemäßen Verfahrens zur Überprüfung derselben Programmanweisung eine alternative Modifizierung stattfindet.

Die ursprüngliche Wirkung, die die Ausführung der nicht modifizierten Programmanweisungen auf das Endgerät hat, ändert sich durch die Modifizierung der Programmanweisung nicht. Es können zusätzliche Wirkungen, beispielsweise ein erhaltener Prüfwert, aufgrund der Modifizierung der Programmanweisungen entstehen, wobei diese zusätzlichen Wirkungen der Überprüfung des Ausführens der Programmanweisungen dienen.

Anschließend werden die modifizierten Programmanweisungen von der vertrauenswürdigen Instanz an das Endgerät übertragen und vom Endgerät ausgeführt, wobei durch das Ausführen der modifizierten Programmanweisungen ein Prüfwert erhalten wird. Dieser Prüfwert wird aufgrund der Modifizierung der Programmanweisungen erhalten. Dieser Prüfwert wird wiederum vom Endgerät an die vertrauenswürdige Instanz übertragen und in der vertrauenswürdigen Instanz zum Überprüfen, ob die angeforderten Programmanweisungen im Endgerät ausgeführt wurden, verifiziert.

Durch dieses Verfahren wird in vorteilhafter Weise erreicht, dass die auszuführenden Programmanweisungen vor jedem Ausführen individuell modifiziert werden. Eine Vorhersage seitens einer eingenisteten Fremdeinwirkung ist somit nicht möglich, da die Ausführung der modifizierten Programmanweisungen zwangsläufig zu einem individuellen Prüfwert führt. Fremdprogrammanweisungen, die sich aufgrund Spionageangriffe in die Programmanweisungen einnisten, kennen den zu erhaltenen Prüfwert nicht oder führen zum Erhalten eines falschen Prüfwertes, sodass die Überprüfung aufgrund des Prüfwertes innerhalb der vertrauenswürdigen Instanz ergibt, dass nicht die angeforderten Programmanweisungen ausgeführt worden sind.

In einer Ausgestaltung des Verfahrens werden die auszuführenden Programmanweisungen von dem Endgerät vor dem Anfordern an die vertrauenswürdige Instanz übertragen. Somit werden die Programmanweisungen nur temporär und zum Zweck des Modifizierens in der vertrauenswürdigen Instanz abgelegt. Dadurch ist der Speicherbedarf in der vertrauenswürdigen Instanz verringert und ein ordnungsgemäßes Überprüfen trotzdem gewährleistet.

In vorteilhafter Weise wird der erhaltene Prüfwert in der vertrauenswürdigen Instanz mit einem vor dem Übertragen der modifizierten Programmanweisungen abgelegten Erwartungswert verglichen und bei Übereinstimmung von Prüfwert und Erwartungswert ergibt die Überprüfung, dass die angeforderten Programmanweisungen vom Endgerät ausgeführt worden sind.

Zur Steigerung der Sicherheit und zur Verringerung der Ausführzeit der Überprüfung werden in einer Ausgestaltung nur Teile der Programmanweisungen vom Endgerät angefordert. Bei jeder Ausführung des erfindungsgemäßen Verfahrens können unterschiedliche Teile der, in der vertrauenswürdigen Instanz abgelegten, Programmanweisungen angefordert werden. Die Auswahl der anzufordernden Teile kann zufällig sein. Diese Teile können insbesondere auch Anfangsprogrammanweisungen sein, sodass die Integrität eines Teils, welches am Anfang von vielen Teilen von Programmanweisungen steht, durch das erfindungsgemäße Verfahren sicher geprüft werden kann.

In einer vorteilhaften Ausgestaltung erfolgt die variable Modifizierung derart, dass in die Programmanweisung eine ausführbare Prüfanweisung eingebracht wird. Diese Prüfanweisung liefert beim Ausführen der modifizierten Programmanweisung den Prüfwert, der zum Verifizieren in der vertrauenswürdigen Instanz herangezogen wird. Die vertrauenswürdige Instanz führt diese Prüfanweisung ebenfalls aus und legt das Ergebnis der Prüfanweisung als Erwartungswert ab. Insbesondere können algorithmische Berechnungen, Signaturen über nichtmodifizierte oder modifizierte Teile der angeforderten Programmanweisung, kryptografische Berechnungen als Prüfanweisung eingebracht sein. Die Prüfanweisung ist insbesondere bei jeder Modifizierung anders. Beispielhaft ist eine Prüfanweisung ein ausführbarer Hash-Algorithmus, wobei als Prüfwert ein errechneter Hashwert über einen bestimmten Teil, insbesondere den modifizierten Programmanweisungen erhalten wird.

Im Erfindungsgedanken ist ebenfalls umfasst, dass nicht angeforderte Programmanweisungen mittels der modifizierten Programmanweisungen überprüft werden. Beispielsweise werden modifizierte Programmanweisungen an das Endgerät übertragen, diese werden vom Endgerät ausgeführt und durch die zusätzliche Wirkung der Modifizierung können bereits ausgeführte Programmanweisungen überprüft werden, bzw. Wirkungen, die durch bereits ausgeführte Programmanweisungen vorhanden sein müssen, insbesondere Softwareroutinen, Schnittstellenkonfigurationen oder Zugriffsrechte überprüft werden. Eingenistete Fremdprogrammanweisungen durch Schadsoftware kann so erkannt werden.

In einer vorteilhaften Ausgestaltung erfolgt die variable Modifizierung der Programmanweisungen durch Einbringen eines variablen Wertes, insbesondere eines Zufallswertes. Dieser variable Wert wird durch Ausführen der modifizierten Programmanweisungen durch das Endgerät als Prüfwert erhalten und in der vertrauenswürdigen Instanz verifiziert. Alternativ wird über den variablen Wert durch das Modifizieren eine Hashfunktion ausgeführt und ein Hashwert über den variablen Wert als erhaltener Prüfwert übertragen. Ebenfalls kann ein Hashwert über eine noch auszuführende oder bereits ausgeführte Programmanweisung als Prüfwert erhalten werden.

Alternativ erfolgt die variable Modifizierung durch Einbringen einer zufälligen Anzahl von Leerlaufanweisungen, sogenannte idle-tasks oder NOP's, an eine bestimmte oder unterschiedliche Stellen der angeforderten Programmanweisungen. Die Anzahl, die Stelle oder ein Hashwert über Teile der Programmanweisung diese Leerlaufanweisungen beinhaltend dienen dann als zu verifizierender Prüfwert. Alternativ können auch Programmanweisungen ohne gezielte Wirkung, sogenannte Sinnlosbefehle auch als Junk-instructions bezeichnet, eingefügt sein.

Eine weitere Steigerung der Sicherheit wird erhalten, indem das variable Modifizieren durch Randomisieren der angeforderten Teile der Programmanweisungen erfolgt. Ein erhaltener Prüfwert ist dann beispielsweise der Hashwert oder die Signatur über den randomisierten Datenstrom, der als Erwartungswert auch von der vertrauenswürdigen Instanz errechnet und abgelegt wurde.

In einer alternativen Ausgestaltung wird die Programmanweisungen derart variabel modifiziert, dass nach dem Ausführen der modifizierten Programmanweisungen im Endgerät die Übertragung des erhaltenen Prüfwerts kryptografisch verschlüsselt erfolgt, wobei die vertrauenswürdige Instanz den erhaltenen Prüfwert entschlüsseln kann. Dazu wird insbesondere der öffentliche Teil eines Schlüsselpaars als Teil der modifizierten Programmanweisung übertragen. Bei Ausführung der modifizierten Programmanweisung wird das Endgerät aufgefordert, den öffentlichen Teil des Schlüssels zum kryptografischen Verschlüsseln der Übertragung zwischen Endgerät und vertrauenswürdiger Instanz zu verwenden. Entweder wird der erhaltene Prüfwert mit dem Schlüssel verschlüsselt übertragen oder die resultierende verschlüsselte Übertragung ist der Prüfwert, da der zu dem öffentlichen Schlüssel passende private Schlüssel in der vertrauenswürdigen Instanz abgelegt ist und zum Entschlüsseln der verschlüsselt übertragenen Daten vorgesehen ist. Ist ein Entschlüsseln nicht möglich, gelten die angeforderten Programmanweisungen als nicht ausgeführt.

In einer Ausgestaltung wird in Folge des Verifizierens eine Aktion durch die vertrauenswürdige Instanz autorisiert. Als Aktion sind insbesondere Netzzugriffe, Authentifizierungen, Signaturerstellungen oder dergleichen denkbar.

In einer Ausgestaltung sind die angeforderten Programmanweisungen die Startprogrammanweisungen, der sogenannte Boot-Code des Endgeräts. Das Anfordern der Startprogrammanweisungen erfolgt während des Bootens und/ oder im Anschluss an das Booten des Endgeräts. Durch diese Maßnahme ist ein frühzeitiges Einnisten von Fremdprogrammanweisungen einer Schadsoftware unterbunden bzw. kann dieses Einnisten frühzeitig entdeckt werden.

In einer besonderen Ausgestaltung ist das Endgerät ein Mobilfunkendgerät und die vertrauenswürdige Instanz ein Teilnehmeridentifizierungsmodul, eine sogenannte SIM. Das Übertragen der modifizierten Programmanweisung sowie des erhaltenen Prüfwertes erfolgt dabei über eine vorhandene Kommunikationsverbindung zwischen Teilnehmeridentifizierungsmodul und Mobilfunkendgerät, beispielsweise über ISO 7816 oder eine ISO 14443 Verbindung.

In einer alternativen Ausgestaltung ist die vertrauenswürdige Instanz ein Server eines Netzwerkbetreibers, eine intelligente Speicherkarte, beispielsweise einer MMC, mini SD, µSD, USIM oder einer Smart Card oder auf reiner Softwarebasis als ein Trusted Platform Module, kurz TPM, innerhalb eines Betriebssystemkerns. Die vertrauenswürdige Instanz kann darüber hinaus noch weitere funktionale Einheiten, wie Recheneinheiten, Kommunikationsschnittstellen unterschiedlichen Standards aufweisen.

Weiterhin wird ein System zum Ausführen des erfindungsgemäßen Verfahrens vorgeschlagen, wobei das System eine vertrauenswürdige Instanz mit einem Mittel zum Ablegen von Programmanweisungen zur Ausführung im Endgeräts, einem Mittel zum variablen Modifizieren der Programmanweisungen derart, dass die modifizierten Programmanweisungen bei jeder Ausführung des Verfahrens gemäß der vorhergehenden Ansprüche variieren, einem Mittel zum Übertragen der modifizierten Programmanweisungen und einem Mittel zum Verifizieren des erhaltenen Prüfwerts zum Zweck des Überprüfens, ob die Programmanweisungen vom Endgerät ausgeführt worden sind aufweist und das System weiterhin ein Endgerät mit einem Mittel zum Ausführen der modifizierten Programmanweisungen, wobei durch das Ausführen der modifizierten Programmanweisungen ein Prüfwert erhalten wird, einem Mittel zum Anfordern Programmanweisungen von der vertrauenswürdigen Instanz und einem Mittel zum Übertragen des erhaltenen Prüfwerts an die vertrauenswürdige Instanz aufweist.

In vorteilhafter Weise weist die vertrauenswürdige Instanz weiterhin Mittel zum Randomisieren der Programmanweisungen und / oder Mittel zum Berechnen und Ablegen eines Hashwerts über die modifizierten Programmanweisungen auf. Der Hashwert wird dabei zum Verifizieren des erhaltenen Prüfwerts verwendet.

Weiterhin weist die vertrauenswürdige Instanz des erfindungsgemäßen Systems einen Zufallszahlengenerator auf, wobei das variable Modifizieren durch Einbringen einer generierten Zufallszahl erfolgt.

Bei einer vertrauenswürdigen Instanz handelt es sich vorzugsweise um Datenträger mit entsprechenden Sicherheitsfunktionalitäten, wie z.B. Smart Cards, Chipkarten, Token, Massenspeicherkarten, Multimediakarte, Teilnehmeridentifikationskarten in einem mobilen Funknetz.

Die vertrauenswürdige Instanz ist insbesondere als Hardwarekomponente ausgestaltet und als ein fest integrierter Bestandteil im mobilen Endgerät angeordnet, wobei es entweder in der Form nicht vom mobilen Endgerät entnommen werden kann, beispielsweise als M2M Modul, Co-Prozessor bzw. Trusted Base oder als ein entnehmbares Modul mit Sicherheitsfunktionalität mit dem mobilen Endgerät verbunden ist, beispielsweise als Chipkarte, insbesondere einer Subscriber Identification Module, kurz SIM-Karte, Smart Card, Massenspeicherkarte, USB-Token, Multimediakarte, Secure MicroSD-Karte, Mobilfunknetztoken, z.B. ein UMTS-Surfstick. Alternativ ist die vertrauenswürdige Instanz als eine Softwarekomponente in Form eines Trusted Platform Moduls als vertrauenswürdiger Teil des Betriebssystemkernels des mobilen Endgerätes bzw. als ein Sicherheitssoftware-Algorithmus ausgestaltet.

Die TPM-ähnliche vertrauenswürdigen Instanzen prüfen allgemein die Systemintegrität eines elektronischen Geräts, indem geräteneutrale und benutzerneutraler Daten des Geräts erhoben, ausgewertet und weitergegeben werden, welche eine Identifizierung des Geräts oder des Benutzers nicht gestatten. Solche gerätegebundene Daten, die aufgrund ihrer Beschaffenheit oder über ihr Vorliegen in der vertrauenswürdigen Instanz eindeutig dem Gerät zugeordnet sind, können somit zwar die Vertrauenswürdigkeit des Endgeräts gegenüber Dritten ausweisen, sie ermöglichen jedoch keinen Rückschluss auf das konkrete Endgerät und insbesondere auf dessen Benutzer.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: eine schemenhafte Darstellung des erfindungsgemäßen System zum Überprüfen, ob Programmanweisungen in einem Endgerät ausgeführt worden sind;
- Figur 2: ein Ablaufdiagramm des erfindungsgemäßen Verfahrens zum Überprüfen, ob Programmanweisungen in einem Endgerät ausgeführt worden sind;
- Figur 3: ein erstes Ausführungsbeispiel von erfindungsgemäß modifizierten Programmanweisungen
- Figur 4: ein zweites Ausführungsbeispiel von erfindungsgemäß modifizierten Programmanweisungen
- Figur 5: ein drittes Ausführungsbeispiel von erfindungsgemäß modifizierten Programmanweisungen
- Figur 6: ein viertes Ausführungsbeispiel von erfindungsgemäß modifizierten Programmanweisungen

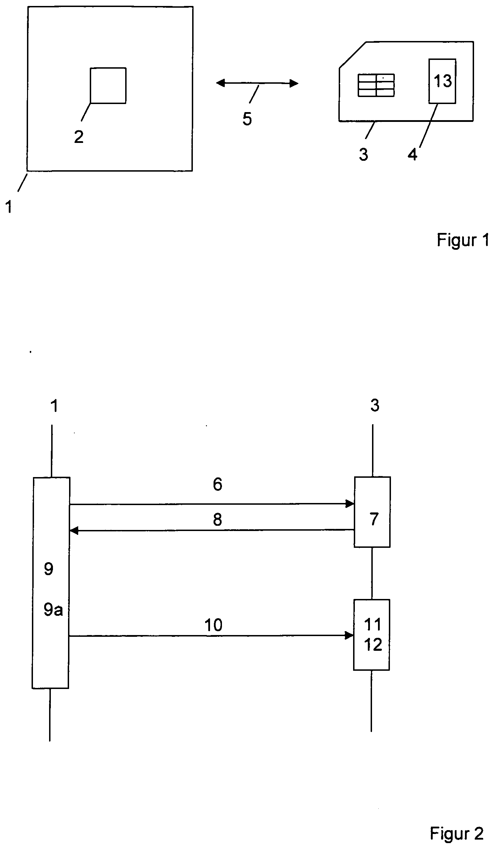

Figur 1 zeigt eine skizzenhafte Darstellung eines erfindungsgemäßen Systems. Ein Endgerät 1 weist hierin eine Zentrale Recheneinheit 2, kurz CPU, auf. Das Endgerät ist bevorzugt eintragbares Endgerät, insbesondere ein Mobilfunkendgerät. Weiteren Funktionsgruppen des Endgeräts 2 wurden der Übersichtlichkeit wegen nicht dargestellt. Die CPU 2 des Endgeräts 1 ist in der Lage Programmanweisungen abzuarbeiten. Dazu sind aus dem Stand der Technik hinlänglich bekannte Infrastrukturen denkbar. Das System weist darüber hinaus eine vertrauenswürdige Instanz 3, hier beispielhaft eine SIM-Karte 3 des Mobilfunkendgeräts 1 auf. Alternativ ist die vertrauenswürdige Instanz eine vertrauenswürdige Softwarekomponente eines Betriebssystemkernels, wie beispielsweise MobiCore®. In der SIM Karte 3 oder dem MobiCore® befindet sich unter anderem ein Speicherbereich 4. Die vertrauenswürdige Instanz 3 und das Endgerät 1 besitzen darüber hinaus Kommunikationsschnittstellen, beispielsweise kontaktbehaftet oder kontaktlos zum Aufbau einer Datenkommunikation 5 zwischen Endgerät 1 und vertrauenswürdiger Instanz 3.

Im Speicherbereich 4 der vertrauenswürdigen Instanz 3 ist zumindest ein Teil von Programmanweisungen 13 enthalten, die in der CPU 2 des Endgeräts 1 ausgeführt werden. Als Programmanweisungen 13 werden eine Folge maschinenlesbarer Befehle/Instruktionen oder Anweisungen verstanden, wobei die Programmanweisungen in Maschinensprache, Quelltext oder Bytecode vorliegen können. Mögliche Zwischenübersetzungseinheiten, wie Compiler, Assembler, Interpreter können zusätzlich vorgesehen sein.

In der vertrauenswürdigen Instanz sind darüber hinaus Mittel zum Modifizieren von angeforderten Programmanweisungen 13, mit denen das Ausführen von Programmanweisungen von dem Endgerät 1 überprüft werden kann. Diese Mittel modifizieren angeforderte Prüfanweisungen 13 in der Art, dass beispielsweise Leerlaufprozesse 14b an beliebige Stellen der angeforderten Programmanweisungen 13 eingefügt werden, dass variable Werte 14c, insbesondere Zufallszahlen, an beliebige Stellen innerhalb der Programmanweisungen 13 eingebracht werden. Ebenfalls sind Prüfanweisungen 14 denkbar, mit denen die Programmanweisungen 13 modifiziert werden können. All diesen Maßnahmen ist gleich, dass das Modifizieren 14 variabel ist, dass heißt wird das Modifizieren 14 erneut über die gleichen angeforderten Programmanweisungen 13 durchgeführt, entstehen anderes modifizierte Programmanweisungen 14. Das heißt, die Anzahl oder der Ort der Leerlaufprozesse 14b innerhalb der angeforderten Programmanweisungen 13 ist anders, die Zufallszahl ist eine andere oder die Prüfanweisung erzielt beim Ausführen der modifizierten Programmanweisungen eine andere zusätzliche Wirkung.

Trotz der variabel modifizierten Programmanweisungen 14 ist die ursprüngliche Wirkung der angeforderten Programmanweisungen 13 stets gleich. Somit ist eine wirkungsgleiche Ausführung von modifizierten und nicht modifizierten Programmanweisungen 14,13 gesichert.

In den Figuren 2 bis 6 wird nun das erfindungsgemäße Verfahren beschrieben.

In Figur 2 ist ein Verfahrensablauf zwischen Endgerät 1 und vertrauenswürdiger Instanz 2 dargestellt.

Das Endgerät 1 erhält während der Ausführung von Programmanweisungen die Aufforderung, die nächsten Programmanweisungen 13 für sich selbst bei einer vertrauenswürdigen Instanz 2 zum Zweck der Ausführung von dem Endgerät 1 anzufordern. Alternativ erhält das Endgerät 1 die Aufforderung, bereits ausgeführte Programmanweisungen 13 durch eine vertrauenswürdige Instanz 3 überprüfen zu lassen. Alternativ sendet das Endgerät 1 zumindest einen Teil der auszuführenden Programmanweisungen 13 vor der Ausführung vom Endgerät an die vertrauenswürdige Instanz, sodass die vertrauenswürdige Instanz 3 die Programmanweisungen 13 nicht im Speicherbereich 4 abgelegt haben muss.

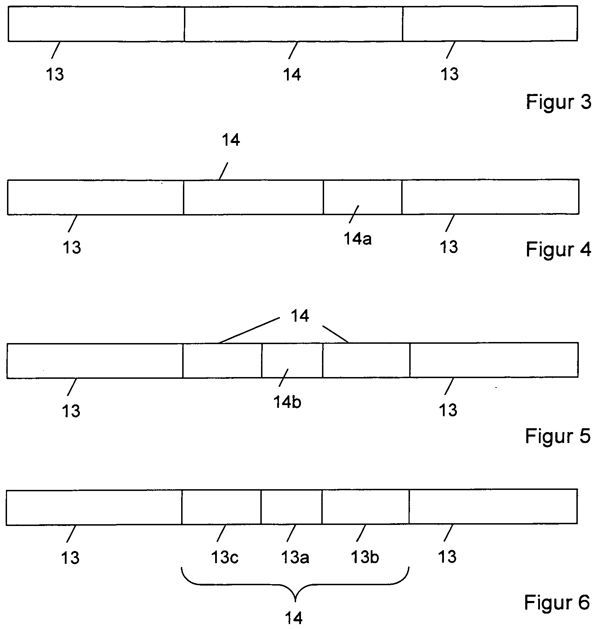

Gemäß Pfeil 6 der Figur 2 wird nun zumindest ein Teil der Programmanweisungen 13 von dem Endgerät angefordert. Dieses Anfordern kann einen zufällig ausgewählten Teil der Programmanweisungen 13 betreffen oder es können die auszuführenden Programmanweisungen 13 mit an die vertrauenswürdige Instanz übertragen werden. In der vertrauenswürdigen Instanz erfolgt dann das variable Modifizieren 7 der angeforderten Programmanweisungen 13. Das Modifizieren wird in den Figuren 3 bis 6 ausführlicher betrachtet. Die variabel modifizierten Programmanweisungen 14 werden nun über die Datenkommunikation 5 an das Endgerät 1 übertragen, siehe Pfeil 8. Im Endgerät 1 werden gemäß Schritt 9 die modifizierten Programmanweisungen 14 ausgeführt. Aufgrund der Modifizierung 14 wird dabei ein Prüfwert 9a erhalten. Dieser Prüfwert wird im Schritt 10 an die vertrauenswürdige Instanz übertragen. Der Prüfwert ist beispielsweise das Ergebnis einer ausgeführten Prüfanweisung, die als Modifizierung in die Programmanweisung 13 eingebracht worden ist. Alternativ ist der Prüfwert die Modifizierung selbst, beispielsweise eine Zufallszahl 14c oder die Anzahl von eingebrachten Leerlaufprozessen 14b. Der Prüfwert kann beispielsweise der Hashwert oder eine kryptografische Signatur über einen Teil der modifizierten Programmanweisung 14 sein, oder über einen Teil 13a, 13b, 13c einer bereits ausgeführten oder einer noch auszuführenden Programmanweisung sein. Ebenfalls kann der Prüfwert die Verschlüsselung einer zwangsläufig anstehenden Kommunikation mit der vertrauenswürdigen Instanz sein.

In allen Fällen wird der erhaltene Prüfwert gemäß Schritt 11 in der vertrauenswürdigen Instanz verifiziert. Dies ist insbesondere durch Vergleich des Prüfwerts 9a mit einem Erwartungswert der vertrauenswürdigen Instanz 3 möglich. Der Erwartungswert wurde dabei beispielsweise vor dem Übertragen durch Ausführen der modifizierten Programmanweisungen 14 in der vertrauenswürdigen Instanz 3 erzeugt und in der Instanz 3 abgelegt. In einem einfachen Fall entsprechen Erwartungswert und Prüfungswert der Modifizierung 14.

Wenn der Prüfwert 9a dem Erwartungswert entspricht, autorisiert die vertrauenswürdige Instanz 3 eine Aktion im Schritt 12. Dies kann beispielsweise das Freischalten eines Netzzugriffs, das Signieren von Daten, das Authentifizieren an einem eService oder vieles mehr sein. Wurde der Prüfwert nicht verifiziert wird die Aktion nicht autorisiert. Dies ist gleichbedeutend mit der Erkenntnis, dass die angeforderten Programmanweisungen nicht in der Form vom Endgerät ausgeführt worden sind.

In der Figur 3 ist das Prinzip des Modifizierens 14 dargestellt. Die angeforderten Programmanweisungen 13 sind hier als Datenstrom dargestellt. Diese Programmanweisungen 13 werden durch eine Modifizierung 14 verändert und es werden modifizierte Programmanweisungen erhalten.

In der Figur 4 ist ein zweites Ausführungsbeispiel der Modifizierung 14 dargestellt. Hier ist ein Teil der Modifizierung 14 ein kryptografischer Schlüssel 14a. Dieser Schlüssel 14a ist der öffentliche Teil eines nach PKI Infrastruktur aufgebauten asymmetrischen Schlüsselpaars. Der private Teil des Schlüssels wird in der vertrauenswürdigen Instanz 3 abgelegt. Der Schlüssel 14a wird nun beispielsweise in eine Prüfanweisung als Modifizierung in die angeforderten Programmanweisungen 13 eingebracht. Durch die Ausführung der modifizierten Programmanweisungen 14 durch das Endgerät wird die Prüfanweisung ausgeführt. Dies ist beispielsweise ein Hash-Algorithmus über den gesamten Datenstrom der Figur 4. Gemäß der Prüfanweisung wird der Hash-Algorithmus über den in Figur 4 dargestellten Datenstrom ausgeführt und als Ergebnis ein Hashwert erhalten. Bei Ausführung der eingebrachten Prüfanweisung wird nun zunächst der Hashwert als Prüfwert 9a erhalten, der gemäß der Prüfanweisung zusätzlich mit dem kryptografischen Schlüssel 14a verschlüsselt wird. Nach Übertragung des verschlüsselten Prüfwerts 9a wird die vertrauenswürdige Instanz 3 mittels des privaten Teils des Schlüssels den Prüfwert entschlüsseln können und anschließend den Hashwert verifizieren.

Wenn Schadsoftware Fremdprogrammanweisungen in die auszuführenden Programmanweisungen einnisten würde, würde zunächst der zu erhaltene Prüfwert, hier der berechnete Hashwert nicht mit dem Erwartungswert übereinstimmen. Zusätzlich würde die Verschlüsselung nicht richtig oder gar nicht erfolgen, sodass die vertrauenswürdige Instanz den nicht verschlüsselten und falschen Prüfwert erkennt und durch Vergleichen mit dem Erwartungswert nicht verifiziert. Als Folge ist beispielsweise das Sperren des Endgeräts, das Verweigern von Netzzugriff und Ähnliches möglich. Der Schlüssel 14a kann auch ohne weitere Prüfanweisung als Modifizierung 14 übertragen werden und der Schlüssel als Voraussetzung für eine kryptografisch verschlüsselte Kommunikation zwischen Endgerät 1 und Instanz 3 angesehen werden.

In Figur 5 ist ein drittes Ausführungsbeispiel einer Modifizierung 14 gezeigt. Hier werden in einen Teil der Modifizierung 14 Leerlaufprozesse 14b eingefügt. Die Anzahl und die Stelle der eingefügten Leerlaufprozesse 14b sind zufällig und beliebig. Vor der Übertragung an das Endgerät 1 wird in der vertrauenswürdigen Instanz 3 ein Hashwert über die modifizierten Programmanweisungen 14 durchgeführt und dieser als Erwartungswert abgelegt. Nach Übertragung an das Endgerät 1 wird über die modifizierten Programmanweisungen 14 ebenfalls ein Hashwert als Prüfwert 9a erhalten. Die Instanz 3 verifiziert dann den Prüfwert in Abhängigkeit des Erwartungswerts. Da Anzahl und Stelle der Leerlaufprozesse beliebig sind, ist der Hashwert stets variabel und kann von eingenisteten Fremdprogrammanweisungen nicht simuliert werden. Eine Prüfanweisung, welcher Teil der modifizierten Programmanweisung zu hashen ist, kann ebenfalls als Modifizierung 14 eingebracht sein. Anstelle von Leerlaufprozessen sind auch sorgenannte Sinnlosbefehle bzw. junk-instructions denkbar, beispielsweise x-mal durchlaufen einer leeren Programmschleife.

In der Figur 6 ist ein viertes Ausführungsbeispiel einer Modifizierung 14 dargestellt. Hier sind die Programmanweisungen 13 zumindest teilweise in Teile 13a, 13b, 13c unterteilt. Diese Teile 13a, 13b, 13c werden nun randomisiert, das heißt die Reihenfolge wird in zufälliger Weise vertauscht. Als zu erhaltener Prüfwert 9a ist auch hier eine digitale Signatur oder ein Hashwert zu berechnen, der in der vertrauenswürdigen Instanz verifiziert wird.

Da das Vertauschen der Reihenfolge zufällig ist, können eingenistete Fremdprogrammanweisungen den Erwartungswert nicht abbilden, das Verifizieren des Prüfwertes 9a schlägt daher fehl.

In einer nicht dargestellten Variante wird ein zufälliger Wert 14c in die angeforderten Programmanweisungen eingebracht, der dann als Prüfwert 9a verifiziert wird.

Alle beschriebenen Modifizierungen können natürlich beliebig kombiniert werden, um ein sicheres Überprüfen zu gewährleisten. Zusätzlich ist es zur Steigerung der Sicherheit notwendig, die Übertragung zwischen Endgerät 1 und vertrauenswürdiger Instanz 3 abzusichern, beispielsweise durch eine weitere kryptografische Verschlüsselung. Somit kann ein Mithören eingenisteter Fremdprogrammanweisungen ausgeschlossen werden.

Es ist im Erfindungsgedanken ebenfalls enthalten, dass das Endgerät 1 die auszuführenden Programmanweisungen vor dem variablen Modifizieren durch die vertrauenswürdige Instanz 2 überträgt. Da das Modifizieren stets variabel ist und darüber hinaus mit Berechnungsschritten des Endgeräts in Form von auszuführenden Programmanweisungen verknüpft ist, ist ein Mithören und Simulieren des erhaltenen Prüfwertes durch Fremdprogrammanweisungen nicht möglich.

Eine Überprüfung der modifizierten Programmanweisungen durch die schädlichen Fremdprogrammanweisungen selbst ist als Halteproblem in der Informatik bekannt. Dieses Problem ist bekanntermaßen nachweislich unlösbar.

### Bezugszeichenliste

- 1: Endgerät
- 2: CPU des Endgeräts
- 3: Vertrauenswürdige Instanz, SIM
- 4: Speicherbereich der vertrauenswürdigen Instanz
- 5: Datenkommunikationsverbindung
- 6: Anfordern von Programmanweisungen
- 7: Variables Modifizieren der Programmanweisungen
- 8: Übertragen der modifizierten Programmanweisungen
- 9: Ausführen der modifizierten Programmanweisungen
- 9a: Erhalten eines Prüfwerts
- 10: Übertragen des erhaltenen Prüfwerts
- 11: Verifizieren des Prüfwert
- 12: Autorisieren/ Freigeben einer Aktion
- 13: Programmanweisungen
- 13a,b,c: Teile der Programmanweisungen
- 14: Modifizierung
- 14a: Kryptografischer Schlüssel
- 14b: Leerlaufprozesse
- 14c: Variabler Wert, Zufallszahl

## Patentansprüche

1. Verfahren zum Überprüfen, ob Programmanweisungen (13) von einem Endgerät (1) ausgeführt worden sind, mit den Verfahrensschritten:
- Anfordern (6) zumindest eines Teils der Programmanweisungen (13) durch das Endgerät (1) von einer vertrauenswürdigen Instanz (3), wobei die Programmanweisungen (13) in ausführbarer Form in der vertrauenswürdigen Instanz (3), insbesondere einer Chipkarte, abgelegt sind;
- variables Modifizieren des angeforderten Teils der ausführbaren Programmanweisungen (7) durch die vertrauenswürdige Instanz (3) derart, dass der modifizierte Teil der Programmanweisungen bei jeder Ausführung des Verfahrens variiert;
- Übertragen des modifizierten Teils der Programmanweisungen (8) von der vertrauenswürdigen Instanz (3) an das Endgerät (1);
- Ausführen der Programmanweisungen (13) unter Verwendung des modifizierten Teils der Programmanweisungen (9) vom Endgerät (1), wobei durch das Ausführen der modifizierten Programmanweisungen (9) ein Prüfwert (9a) erhalten wird;
- Übertragen des erhaltenen Prüfwertes (10) von dem Endgerät (1) an die vertrauenswürdige Instanz (3); und
- Verifizieren des erhaltenen Prüfwertes (11) in der vertrauenswürdigen Instanz (3) zum Überprüfen, ob der modifizierte Teil der Programmanweisungen (13) und/oder bereits ausgeführte Programmanweisungen im Endgerät (1) ausgeführt wurden.

2. Verfahren nach Anspruch 1, wobei unmittelbar vor oder während des Schritts des Anforderns zumindest der Teil der Programmanweisungen (13) von dem Endgerät an die vertrauenswürdige Instanz (3) übertragen wird.

3. Verfahren nach Anspruch 1 oder 2, wobei das Verifizieren das Vergleichen des erhaltene Prüfwert (9a) mit einem Erwartungswert in der vertrauenswürdigen Instanz (3) umfasst.

4. Verfahren nach einem der vorhergehenden Ansprüche, wobei bei jeder Ausführung des Verfahrens unterschiedliche Teile der Programmanweisungen (13) angefordert werden.

5. Verfahren nach einem der vorhergehenden Ansprüche, wobei die Programmanweisungen (13) durch Einbringen zumindest einer, im Endgerät (1) ausführbaren Prüfanweisung (14) variabel modifiziert werden.

6. Verfahren nach einem der vorhergehenden Ansprüche, wobei die Programmanweisung (13) durch Einbringen eines Wertes (14c), insbesondere eines Zufallswertes, und/oder Einbringen einer unterschiedlichen Anzahl von Leerlaufanweisungen (14b) variabel modifiziert werden.

7. Verfahren nach einem der vorhergehenden Ansprüche, wobei das variable Modifizieren (14) durch Randomisieren von Teilen (13a, 13b, 13c) der Programmanweisungen (13) erfolgt.

8. Verfahren nach einem der vorhergehenden Ansprüche, wobei die Programmanweisungen (13) derart variabel modifiziert werden, dass nach dem Ausführen der modifizierten Programmanweisungen (9) im Endgerät (1) die Übertragung des erhaltenen Prüfwerts (8) kryptografisch verschlüsselt erfolgt, wobei die vertrauenswürdige Instanz den erhaltenen Prüfwert (9a) entschlüsseln kann.

9. Verfahren nach einem der vorhergehenden Ansprüche, wobei die vertrauenswürdige Instanz (3) in Folge des Verifizierens eine Aktion autorisiert (12).

10. Verfahren nach einem der vorhergehenden Ansprüche, wobei die Programmanweisungen (13) die Startprogrammanweisungen des Endgeräts (1) sind und das Anfordern der Startprogrammanweisungen (6) während des Bootens und/oder im Anschluss an das Booten des Endgeräts (1) erfolgt.

11. Verfahren nach einem der vorhergehenden Ansprüche, wobei der erhaltene Prüfwert (9a) ein Hashwert über zumindest Teile der modifizierten Programmanweisungen (13a, 13b, 13c) ist.

12. Verfahren nach einem der vorhergehenden Ansprüche, wobei das Endgerät (1) ein Mobilfunkendgerät und die vertrauenswürdige Instanz (3) ein Teilnehmeridentifizierungsmodul (SIM) ist und wobei das Übertragen (8, 10) über eine vorhandene Kommunikationsverbindung (5) vom Teilnehmeridentifizierungsmodul und dem Mobilfunkendgerät erfolgt.

13. System zum Ausführen eines Verfahrens gemäß der vorhergehenden Ansprüche, mit:
- einer vertrauenswürdigen Instanz, aufweisend:
- Mittel zum Ablegen von Programmanweisungen zur Ausführung im Endgeräts;
- Mittel zum variablen Modifizieren von Teilen der Programmanweisungen derart, dass der Teil der modifizierten Programmanweisungen bei jeder Ausführung des Verfahrens gemäß der vorhergehenden Ansprüche variiert;
- Mittel zum Übertragen des Teils der modifizierten Programmanweisungen; und
- Mittel zum Verifizieren des erhaltenen Prüfwerts zum Zweck des Überprüfens, ob der Teil der modifizierten Programmanweisungen und/oder bereits ausgeführte Programmanweisungen vom Endgerät ausgeführt worden sind;
und
- einem Endgerät, aufweisend:
- Mittel zum Ausführen der Programmanweisungen (13) unter Verwendung des Teils der modifizierten Programmanweisungen, wobei durch das Ausführen der modifizierten Programmanweisungen ein Prüfwert erhalten wird;
- Mittel zum Anfordern zumindest eines Teils der Programmanweisungen von der vertrauenswürdigen Instanz; und
- Mittel zum Übertragen des erhaltenen Prüfwerts an die vertrauenswürdige Instanz.

14. System nach Anspruch 13, wobei die vertrauenswürdige Instanz Mittel zum Berechnen und Ablegen eines Hashwerts über die modifizierten Programmanweisungen aufweist und der Hashwert zum Verifizieren des erhaltenen Prüfwerts verwendet wird.

15. System nach Anspruch 13, wobei die vertrauenswürdige Instanz einen Zufallszahlengenerator aufweist und das variable Modifizieren durch Einbringen einer generierten Zufallszahl erfolgt.

## Claims

1. A method for checking whether program instructions (13) have been executed by an end device (1), having the method steps of:
- calling (6) at least a portion of the program instructions (13) by the end device (1) from a trustworthy instance (3), wherein the program instructions (13) are stored in executable form in the trustworthy entity (3), in particular a chip card;
- variably modifying the requested portion of the executable program instructions (7) by the trustworthy entity (3) such that upon each execution of the method the modified portion of the program instructions varies;
- transferring the modified portion of the program instructions (8) from the trustworthy entity (3) to the end device (1);
- executing the program instructions (13) while employing the modified portion of the program instructions (9) by the end device (1), wherein by the executing of the modified program instructions (9) a check value (9a) is obtained;
- transferring the obtained check value (10) from the end device (1) to the trustworthy entity (3); and
- verifying the obtained check value (11) in the trustworthy entity (3) for checking whether the modified portions of the program instructions (13) and/or the already executed program instructions have been executed in the end device (1).

2. The method according to claim 1, wherein directly before or during the step of calling at least the portion of the program instructions (13) is transferred from the end device to the trustworthy entity (3).

3. The method according to claim 1 or 2, wherein the verifying comprises the comparing of the obtained check value (9a) with an expected value in the trustworthy entity (3).

4. The method according to any of the preceding claims, wherein upon each execution of the method different portions of the program instructions (13) are called for.

5. The method according to any of the preceding claims, wherein the program instructions (13) are variably modified through incorporating of at least one check instruction (14) executable in the end device (1).

6. The method according to any of the preceding claims, wherein the program instructions (13) are variably modified through incorporating of a value (14c), in particular a random value, and/or incorporating of a different number of idle instructions (14b).

7. The method according to any of the preceding claims, wherein the variable modifying (14) is effected through randomizing of portions (13a, 13b, 13c) of the program instructions (13).

8. The method according to any of the preceding claims, wherein the program instructions (13) are variably modified such that after the executing of the modified program instructions (9) in the end device (1) the transfer of the obtained check value (8) is effected in cryptographically encrypted form, the trustworthy entity being able to decrypt the obtained check value (9a).

9. The method according to any of the preceding claims, wherein the trustworthy entity (3) authorizes (12) an action as a result of the verifying.

10. The method according to any of the preceding claims, wherein the program instructions (13) are the start program instructions of the end device (1), and the calling for the start program instructions (6) is effected during the boot and/or after the boot of the end device (1).

11. The method according to any of the preceding claims, wherein the obtained check value (9a) is a hash value of at least portions of the modified program instructions (13a, 13b, 13c).

12. The method according to any of the preceding claims, wherein the end device (1) is a mobile radio end device, and the trustworthy entity (3) is a Subscriber Identification Module (SIM), and wherein the transferring (8, 10) is effected via an existing communication connection (5) of the Subscriber Identification Module and the mobile radio end device.

13. A system for executing a method according to the preceding claims, having:
- a trustworthy entity, having:
- means for storing program instructions for execution in the end device;
- means for variably modifying portions of the program instructions such that upon each execution of the method the modified portion of the program instructions varies according to the preceding claims;
- means for transferring the portion of the modified program instructions; and
- means for verifying the obtained check value for the purpose of checking whether the portion of the modified program instructions and/or already executed program instructions have been executed by the end device;
and
- an end device, having:
- means for executing the program instructions (13) while employing the portion of the modified program instructions, wherein by the executing of the modified program instructions a check value is obtained;
- means for calling at least a portion of the program instructions from the trustworthy entity; and
- means for transferring the obtained check value to the trustworthy entity.

14. The system according to claim 13, wherein the trustworthy entity has means for computing and storing a hash value of the modified program instructions, and the hash value is employed for verifying the obtained check value.

15. The system according to claim 13, wherein the trustworthy entity has a random number generator, and the variable modifying is effected through incorporating of a generated random number.

## Revendications

1. Procédé destiné à contrôler si des instructions de programme (13) ont été exécutées par un terminal (1), comprenant les étapes de procédé suivantes :
- demande (6) d'au moins une partie des instructions de programme (13) par le terminal (1), à une instance fiable (3), cependant que les instructions de programme (13) sont stockées sous forme exécutable dans l'instance fiable (3), en particulier une carte à puce.
- modification variable, par l'instance fiable (3), de la partie demandée des instructions de programme (7) exécutables, de telle façon que la partie modifiée des instructions de programme varient à chaque exécution du procédé ;
- transmission de la partie modifiée des instructions de programme (8) de l'instance fiable (3) au terminal (1) ;
- exécution des instructions de programme (13) en utilisant la partie modifiée des instructions de programme (9), par le terminal (1), cependant que, par l'exécution des instructions de programme (9) modifiées, une valeur de contrôle (9a) est obtenue ;
- transmission de la valeur de contrôle (10) obtenue, du terminal (1) à l'instance fiable (3) et
- vérification, dans l'instance fiable (3), de la valeur de contrôle (11) obtenue, afin de contrôler si la partie modifiée des instructions de programme (13) et/ou des instructions de programme déjà exécutées ont été exécutées dans le terminal (1).

2. Procédé selon la revendication 1, cependant que, juste avant ou pendant l'étape de la demande, au moins la partie des instructions de programme (13) est transmise par le terminal à l'instance fiable (3).

3. Procédé selon la revendication 1 ou 2, cependant que la vérification comprend la comparaison, dans l'instance fiable (3), de la valeur de contrôle (9a) obtenue avec une valeur escomptée.

4. Procédé selon une des revendications précédentes, cependant que, à chaque exécution du procédé, différentes parties des instructions de programme (13) sont demandées.

5. Procédé selon une des revendications précédentes, cependant que les instructions de programme (13) sont variablement modifiées par introduction d'au moins une instruction de contrôle (14) exécutable dans le terminal (1).

6. Procédé selon une des revendications précédentes, cependant que les instructions de programme (13) sont variablement modifiées par introduction d'une valeur (14c), en particulier d'une valeur aléatoire, et/ou par introduction d'une nombre différent d'instructions de marche inactive (14b).

7. Procédé selon une des revendications précédentes, cependant que la modification variable (14) a lieu par randomisation de parties (13a, 13b, 13c) des instructions de programme (13).

8. Procédé selon une des revendications précédentes, cependant que les instructions de programme (13) sont variablement modifiées de telle façon que, après l'exécution des instructions de programme (9) modifiées dans le terminal (1), la transmission de la valeur de contrôle (8) obtenue a lieu de façon chiffrée cryptographiquement, cependant que l'instance fiable peut déchiffrer la valeur de contrôle (9a).

9. Procédé selon une des revendication précédentes, cependant que l'instance fiable (3), à la suite de la vérification, autorise (12) une action.

10. Procédé selon une des revendication précédentes, cependant que les instructions de programme (13) sont les instructions de programme de lancement du terminal (1), et que la demande des instructions de programme de lancement (6) a lieu durant le démarrage et/ou aussitôt après le démarrage du terminal (1).

11. Procédé selon une des revendication précédentes, cependant que la valeur de contrôle (9a) obtenue est une valeur de hachage portant sur au moins des parties des instructions de programme (13a, 13b, 13c) modifiées.

12. Procédé selon une des revendications précédentes, cependant que le terminal (1) est un terminal de radiocommunication mobile et que l'instance fiable (3) est un module d'identification d'abonné (SIM), et cependant que la transmission (8, 10) a lieu par l'intermédiaire d'une liaison existante de communication (5) du module d'identification d'abonné et du terminal de radiocommunication mobile.

13. Système d'exécution d'un procédé selon les revendications précédentes, comprenant:
- une instance fiable comportant :
- des moyens de stockage d'instructions de programme pour exécution dans le terminal;
- des moyens de modification variable de parties des instructions de programme, de telle façon que la partie des instructions de programme modifiées varie à chaque exécution du procédé selon les revendications précédentes, ;
- des moyens de transmission de la partie des instructions de programme modifiées ; et
- des moyens de vérification de la valeur de contrôle obtenue, afin de contrôler si la partie des instructions de programme modifiées et/ou des instructions de programme déjà exécutées ont été exécutées par le terminal ;
et
- un terminal comportant :
- des moyens d'exécution des instructions de programme (13) en utilisant la partie des instructions de programme modifiées, cependant que, par l'exécution des instructions de programme modifiées, une valeur de contrôle est obtenue ;
- des moyens de demande d'au moins une partie des instructions de programme à l'instance fiable ; et
- des moyens de transmission de la valeur de contrôle obtenue à l'instance fiable.

14. Système selon la revendication 13, cependant que l'instance fiable comporte des moyens de calcul et de stockage d'une valeur de hachage portant sur les instructions de programme modifiées, et que la valeur de hachage est utilisée pour la vérification de la valeur de contrôle obtenue.

15. Système selon la revendication 13, cependant que l'instance fiable comporte un générateur de nombres aléatoires, et que la modification variable a lieu par introduction d'un nombre aléatoire généré.
